# FASCICULE DE BREVET EUROPEEN

(11) **EP 4 194 344 B1**
(45) Date de publication et mention de la délivrance du brevet: **12.06.2024**
(21) Numéro de dépôt: 22211875.4
(22) Date de dépôt: 07.12.2022
(51) Int. Cl.: B64G 1/10, B64G 1/44, B64G 1/66, H04B 7/185

(54) **AGENCEMENT D'ANTENNES TTC POUR SATELLITE PLAT**
TTC-ANTENNENANORDNUNG FÜR EINEN FLACHEN SATELLITEN
TTC ANTENNA ARRANGEMENT FOR FLAT SATELLITE

(30) Priorité: 09.12.2021 FR 2113212
(43) Date de publication de la demande: 14.06.2023
(73) Titulaire: THALES, 92190 Meudon (FR)
(72) Inventeur: FERRANDO, Nicolas, 31170 TOURNEFEUILLE (FR); LEPELTIER, Philippe, 31320 CASTANET-TOLOSAN (FR); POPULUS, Thierry, 31470 FONTENILLES (FR)
(74) Mandataire: Atout PI Laplace

(56) Documents cités:
- EP-A1- 3 254 973
- WO-A1-92/00223
- FR-A1- 2 788 179
- FR-A1- 2 789 652

## Description

L'invention concerne le domaine des satellites, et en particulier un satellite comprenant un système antennaire.

Lors de la mise en poste d'un satellite, et tout au long de sa mission, le satellite doit pouvoir communiquer à tout moment avec un centre de contrôle au sol, quelle que soit l'attitude de la plateforme.

Pour cela, le satellite dispose d'un système dit « TTC » (« Telemetry, Tracking and Command », expression signifiant en français télémétrie, poursuite et télécommande).

Une liaison de télémesure permet de transmettre au centre de contrôle des informations relatives à l'état du satellite, au travers d'une pluralité de mesures. Une liaison de télécommande permet de transmettre, depuis le centre de contrôle, des commandes spécifiques pour le traitement de tout événement ayant lieu dans le satellite (manoeuvres d'orbite, tests équipements, anomalies, pannes, etc.).

La liaison doit être assurée quelle que soit l'attitude de la plateforme. Pour cela, le système antennaire TTC est généralement composé de deux antennes de télémesure Tx, formant un ensemble antennaire omnidirectionnel de télémesure, et de deux antennes de télécommande Rx, formant un ensemble antennaire omnidirectionnel de télécommande.

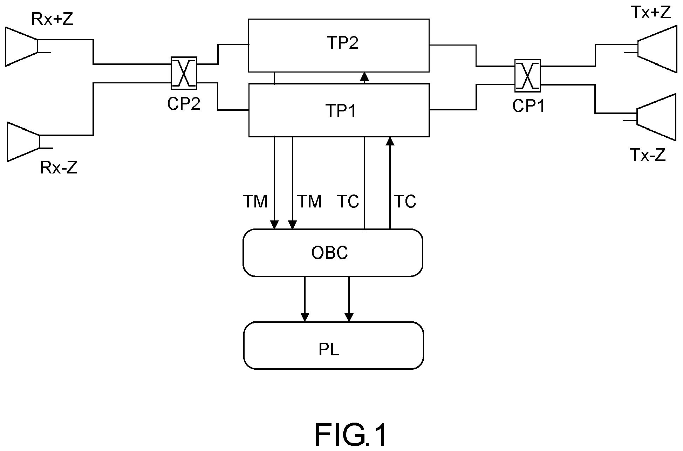

Un exemple de système TTC classique est représenté sur la figure 1.

Un système TTC classique comprend, pour la télémesure, un transpondeur TP1, afin de moduler les signaux de télémesure TM issus de l'ordinateur de bord OBC de la plateforme PL, un coupleur CP1, qui permet de dédoubler le signal à émettre sur chacune des antennes, à savoir une première antenne dite antenne terre Tx+Z, et une antenne située de l'autre côté du satellite, dite antenne anti-terre Tx-Z. La couverture de chaque antenne est le plus hémisphérique possible.

De façon analogue, pour la télécommande, le système TTC comprend une première antenne dite antenne terre Rx+Z, et une antenne située de l'autre côté du satellite, dite antenne anti-terre Rx-Z, un coupleur CP2, pour sommer les signaux reçus sur les deux antennes, et un transpondeur TP2, pour démoduler les signaux de télécommande TC, et pour les transmettre à l'ordinateur de bord OBC de la plateforme.

Les données de télécommande TC et de télémesure TM peuvent être respectivement transmises à la charge utile PL ou être transmises par la charge utile PL, via l'ordinateur de bord OBC.

Les antennes dédiées à la télécommande et les antennes dédiées à la télémesure peuvent rayonner selon des polarisations distinctes, par exemple de manière circulaire gauche et/ou circulaire droite, afin de minimiser les interférences entre les deux liaisons.

Pour assurer une couverture omnidirectionnelle entre l'antenne terre et l'antenne anti-terre, les antennes terre et anti-terre sont disposées de manière à rayonner dans des directions opposées.

Chaque antenne opère ainsi dans un cône de +/-75°, ce qui est suffisant pour assurer une liaison avec le centre de contrôle, quelle que soit l'attitude de la plateforme, avec l'une ou l'autre des antennes terre ou anti-terre.

Chacune des antennes d'un couple terre et anti-terre doit ainsi être disposée de façon diamétralement opposée, et dans des endroits complètement dégagés de la plateforme, notamment en disposant les antennes à l'extrémité de mâts fixés à la plateforme, ou bien dans deux coins opposés de la plateforme, pour éviter qu'une partie du satellite ne masque le demi-espace devant l'antenne.

Lorsque les dimensions des plateformes sont importantes, typiquement plusieurs mètres, les antennes d'un couple terre/anti-terre sont disposées à plusieurs mètres de distances l'une par rapport à l'autre, pour les plateformes les plus volumineuses, ce qui engendre des oscillations.

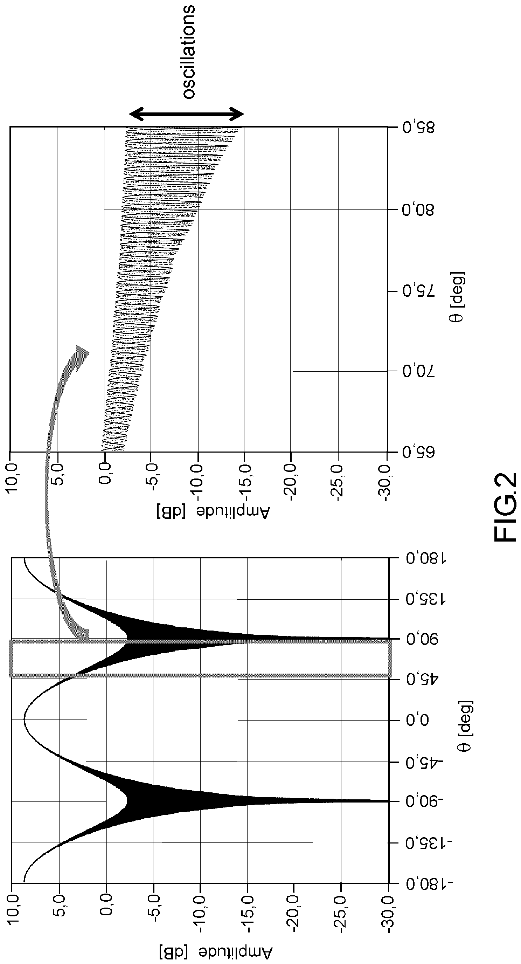

La figure 2 illustre l'amplitude (en dB) du signal reçu par le transpondeur d'un satellite classique, en fonction de l'attitude du satellite, pour la liaison de télécommande dans la bande C (entre 3,4 et 4,2 GHz en réception), lorsque la distance entre l'antenne terre et l'antenne anti-terre sont distantes d'environ 100λ, où λ correspond à la longueur d'onde du signal reçu.

Le diagramme de rayonnement de chaque cornet individuel a été modélisé mathématiquement, à partir de mesures effectuées en chambre anéchoïde.

Les différentes courbes de mise en réseau des cornets, calculées à partir du modèle mathématique du diagramme de rayonnement d'un cornet individuel correspondent aux différents plans de coupe de l'antenne. Sur tous les plans de coupe de l'antenne, des oscillations importantes du signal composite, supérieures à 5 dB, apparaissent entre +60° et +120° (phénomène dit de « ripple »). Ces oscillations, dues aux recombinaisons de phases, nuisent au bilan de liaison.

Il n'existe actuellement pas de solution qui permette d'éviter ces oscillations.

Le document FR 2 789 652 A1 divulgue un satellite dont la durée du cycle de fabrication et de séjour en salle d'intégration est réduite. Le document FR 2 788 179 A1 divulgue un procédé de transmission de signaux vers un satellite présentant au moins deux antennes en redondance chaude et dont les diagrammes se superposent, pour une liaison TTC.

Par ailleurs, l'émergence des méga-constellations, par exemple la méga-constellation « Starlink » (marque déposée) proposée par le constructeur aérospatial « SpaceX » (marque déposée), amène les constructeurs de satellites à proposer des architectures de satellite nouvelles.

La maximisation du volume sous coiffe, pour les lancements multiples avec un grand nombre de satellites, conduit à une configuration de satellite « plat ».

Il existe ainsi un besoin pour des satellites améliorés.

L'invention vise à remédier aux inconvénients précités, en tirant avantage des caractéristiques des satellites plats.

Un objet de l'invention est donc un satellite comprenant une plateforme, au moins un panneau solaire destiné à alimenter le satellite en énergie électrique, le panneau solaire étant fixé le long d'un côté de la plateforme, le satellite comprenant un système antennaire comprenant deux antennes de télécommande, et deux antennes de télémesure, dans lequel
- les deux antennes de télécommande sont disposées dos à dos de part et d'autre de la plateforme, et espacées l'une de l'autre d'une distance inférieure ou égale à λ, où λ correspond à la longueur d'onde du signal de télécommande ou de télémesure,
- les deux antennes de télémesure sont disposées dos à dos, de part et d'autre de la plateforme, et espacées l'une de l'autre d'une distance inférieure ou égale à λ,
- le système antennaire est disposé au niveau de l'une des deux extrémités du côté de la plateforme sur lequel est fixé le panneau solaire.

Avantageusement, la plateforme comprend un transpondeur, le transpondeur étant attenant au système antennaire.

Avantageusement, les deux antennes de télécommande sont disposées entre le transpondeur et les deux antennes de télémesure.

Avantageusement, le transpondeur est disposé entre les deux antennes de télécommande et les deux antennes de télémesure.

Avantageusement, la plateforme comprend un bras formant un prolongement de la plateforme dans le plan de la plateforme, le long d'un axe correspondant à la jonction entre la plateforme et le panneau solaire, le système antennaire étant disposé sur ledit bras de la plateforme.

Avantageusement, le bras de la plateforme comprend un dispositif de déploiement, ledit dispositif de déploiement étant équipé d'un système passif à faible choc.

Avantageusement, le satellite comprend un premier coupleur configuré pour additionner des signaux provenant des antennes de télécommande, un second coupleur configuré pour répartir un signal de télémesure vers les antennes de télémesure, le premier coupleur et le second coupleur étant respectivement connectés entre les antennes de télécommande, et entre les antennes de télémesure.

D'autres caractéristiques, détails et avantages de l'invention ressortiront à la lecture de la description faite en référence aux dessins annexés donnés à titre d'exemple.
La figure 1 illustre un diagramme bloc du système TTC d'un satellite, selon l'art antérieur.
La figure 2 illustre l'amplitude (en dB) du signal reçu par le transpondeur en fonction de l'attitude du satellite, dans un satellite de type parallélépipédique, selon l'art antérieur.
La figure 3 illustre une première vue 3D d'un satellite, selon des modes de réalisation de l'invention.
La figure 4 illustre une seconde vue 3D d'un satellite, selon des modes de réalisation de l'invention.
La figure 5 illustre une vue de coupe du montage dos à dos des couples d'antennes, selon un mode de réalisation de l'invention.
La figure 6, illustre les amplitudes (en dB) du signal reçu par le transpondeur en fonction de l'attitude du satellite, pour des antennes espacées d'une distance égale à 5λ, 2λ, 1λ et 0,5λ, selon des modes de réalisation de l'invention.
La figure 7 illustre un mode de réalisation préférentiel d'agencement du coupleur entre chacune des antennes d'un couple d'antenne.
La figure 8 illustre le mode de réalisation du satellite avec un bras déployable.

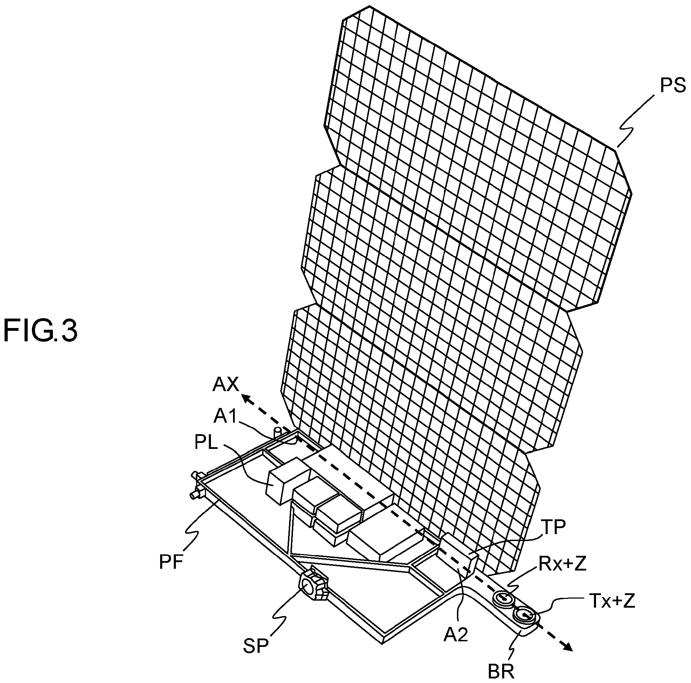

Le satellite selon l'invention est illustré sur la figure 3. Il comprend une plateforme PF, de structure plane, par opposition aux satellites cubiques, ou équivalents, et dont les dimensions longueur/largeur/hauteur ont le même ordre de grandeur. Par structure plane, on entend ainsi un satellite dont la plus petite dimension de la plateforme est inférieure ou égale à λ, où λ correspond à la longueur d'onde du signal de télécommande ou de télémesure. La structure plane permet notamment, lors de la phase de lancement du satellite, d'empiler des dizaines de satellites (non déployés) dans la coiffe du lanceur.

La plateforme peut être rectangulaire, ou encore prendre la forme d'un disque, afin d'être adapté à la forme cylindrique typique des coiffes des lanceurs. Elle peut aussi être en forme de demi-disque, afin de mettre deux satellites côte à côte sur un même étage dans la coiffe d'un lanceur, voire être en forme de quart de disque, afin de mettre quatre satellites côte à côte sur un même étage dans la coiffe d'un lanceur.

Il comprend également un système de propulsion SP pour la mise à poste. Le système de propulsion SP peut comprendre par exemple des propulseurs à effet Hall (moteurs qui utilisent l'énergie fournie par les panneaux solaires) qui produisent leur poussée en expulsant du gaz, par exemple du krypton ou du xénon.

Le satellite comprend une charge utile PL. La charge utile PL peut être par exemple un répéteur de télécommunications dans le cas d'une mission de télécommunications (téléphonie, internet, internet des objets ...), ou bien une charge utile d'observation pour des missions d'observation de la Terre, par exemple pour effectuer une mission d'imagerie.

Le satellite comprend également au moins un panneau solaire PS, destiné à alimenter la plateforme PS et la charge utile PL en énergie électrique. Généralement, les satellites comprennent plusieurs panneaux solaires connectés les uns aux autres, un système de déploiement permettant alors à l'ensemble de panneaux solaires PS de se déployer une fois en orbite.

La présente description mentionne un seul panneau solaire, mais elle peut également être appliquée au cas où un ensemble de plusieurs panneaux solaires est déployé.

Le panneau solaire PS est fixé à un des côtés de la plateforme. Sur la figure 3, le panneau solaire est fixé sur toute la longueur d'un côté de la plateforme PF, le long d'un axe AX, étant entendu que la fixation peut être effectuée par des pattes réparties sur toute la longueur du côté de la plateforme PF. D'autres modes de fixation peuvent être envisagés, sans sortir du cadre de l'invention.

Par exemple, le panneau solaire peut être fixé sur une partie seulement d'un côté de la plateforme.

Le système antennaire, composé de deux antennes de télécommande (Rx+Z, Rx-Z) et de deux antennes de télémesure (Tx+Z, Tx-Z), est, selon l'invention, disposé au niveau de l'une des deux extrémités du côté de la plateforme PF sur lequel est fixé le panneau solaire.

En disposant ainsi le système antennaire au pied du panneau solaire PS, dans un des angles (A1, A2) de la plateforme, seule la tranche du panneau solaire est visible par le système antennaire (et non pas toute la surface du panneau solaire, qui est par nature très réfléchissante), ce qui minimise l'impact de la diffraction et du multi-trajet sur le panneau solaire.

Cet effet est également observable lorsque le système antennaire est disposé au niveau de l'une des deux extrémités du côté de la plateforme PF, et que le panneau solaire est fixé sur une partie de la longueur d'un côté de la plateforme PF.

Le diagramme de rayonnement du système antennaire est donc peu voire pas du tout dégradé par la présence du panneau solaire.

On exploite ainsi le fait que le satellite soit plat pour rapprocher les antennes, et éviter ainsi les oscillations.

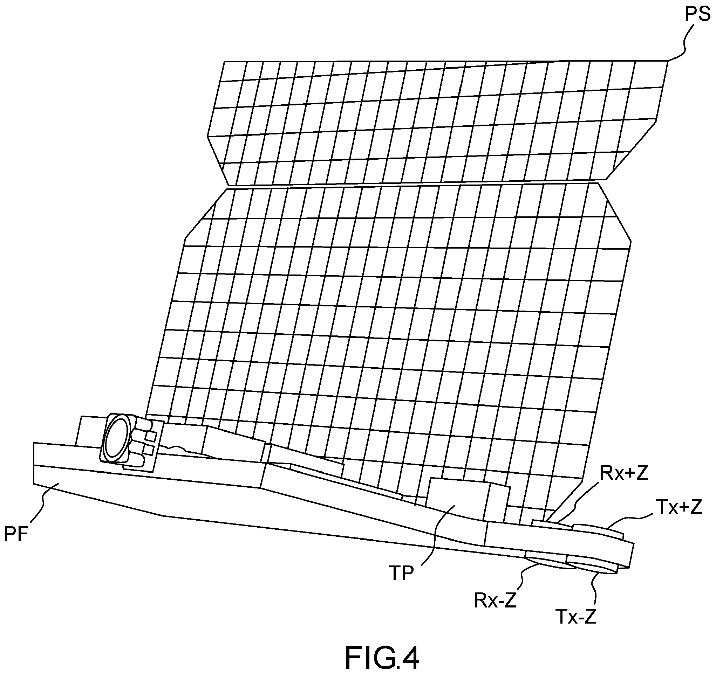

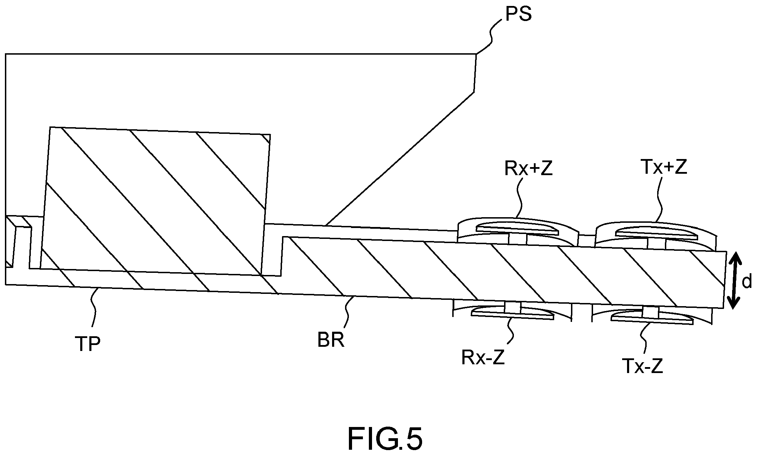

Comme l'illustrent plus en détail les figures 4 et 5, les deux antennes de télécommande (antenne de télécommande terre Rx+Z et antenne de télécommande anti-terre Rx-Z) sont disposées dos à dos de part et d'autre de la plateforme PF, et espacées l'une de l'autre d'une distance inférieure ou égale à λ, où λ correspond à la longueur d'onde du signal de télécommande ou de télémesure.

De même, les deux antennes de télémesure (antenne de télémesure terre Tx+Z et antenne de télémesure anti-terre Tx-Z) sont disposées dos à dos, de part et d'autre de la plateforme, et espacées l'une de l'autre d'une distance inférieure ou égale à λ.

Sur la figure 5, le système antennaire est composé d'antennes de type « patch » (par exemple pour une utilisation en bande S), mais d'autres types d'antennes peuvent être considérés, par exemple des cornets (par exemple pour une utilisation en bande C, X ou Ka).

On entend par "disposées dos à dos » le fait que les antennes soient opposées l'une à l'autre, ou encore selon un montage en tête-bêche : elles sont alignées selon un axe normal au plan de la plateforme, mais leurs axes de rayonnement respectifs pointent dans des directions opposées.

Le faible espacement entre les antennes de télémesure, ainsi qu'entre les antennes de télécommande, matérialisé par la distance d sur la figure 5, qui correspond à l'épaisseur de la plateforme PF, réduit fortement le phénomène de « ripple », comme l'illustre la figue 6. En effet, pour un espacement inférieur à λ entre les antennes de télémesure, ou entre les antennes de télécommande, les différents diagrammes de sommation des antennes ne font plus apparaître d'oscillation lors de la mise en réseau des antennes, quelle que soit l'attitude du satellite.

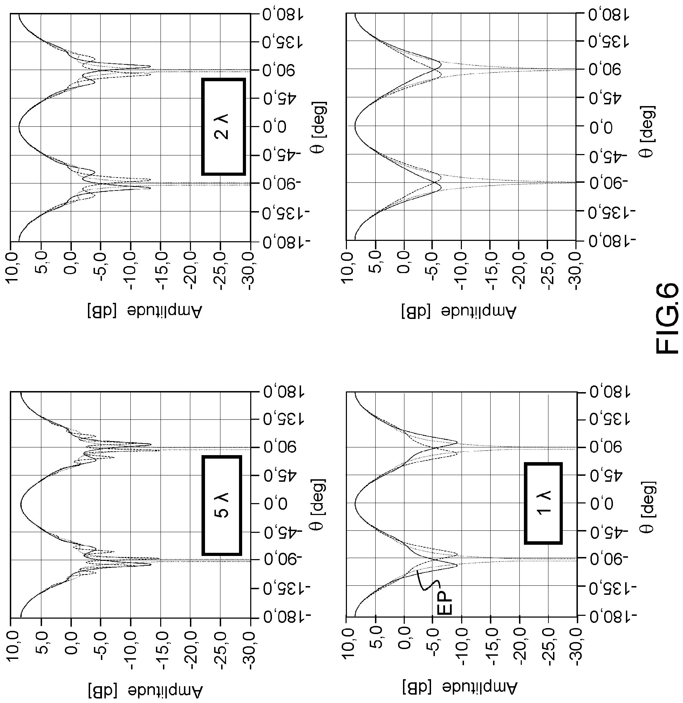

Les épaulements EP visibles sur le diagramme pour un espacement égal à λ ne sont pas considérés comme étant des oscillations, car ils ne créent aucune ambiguïté relative à l'amplitude du signal. Pour un espacement supérieur à λ (par exemple 5 λ ou 2λ sur la figure 6), de telles oscillations sont présentes, ce qui nuit au comportement du système antennaire.

On obtient ainsi une meilleure maîtrise du diagramme de rayonnement, en l'absence d'oscillations.

L'invention permet également de gagner en couverture angulaire. En effet, en l'absence d'oscillations, les mesures sont exploitables sur une plus large plage angulaire. Le caractère omnidirectionnel de l'ensemble antennaire est ainsi amélioré.

L'espacement entre le couple d'antennes de télécommande et le couple d'antennes de télémesure fait l'objet d'un compromis entre gain de volume et complexité du filtre. En effet, les antennes de télécommande comprennent typiquement un filtre, pour éviter que l'énergie rayonnée par les antennes de télémesure ne vienne perturber le bon fonctionnement des antennes de télécommande.

Une proximité du couple d'antennes de télécommande vis-à-vis du couple d'antennes de télémesure induit un fort couplage entre les deux couples d'antennes, ce qui augmente le nombre de pôles de résonance dans le filtre des antennes de télécommande, complexifiant au passage la fabrication du filtre.

Le satellite comprend par ailleurs un transpondeur TP, pour démoduler le signal de télécommande reçu par les antennes de télécommande sur la liaison montante, et pour moduler le signal de télémesure émis par les antennes de télémesure sur la liaison descendante. Le transpondeur comprend ainsi une chaîne de réception, et une chaîne d'émission. Le transpondeur peut également se trouver sous la forme d'un transpondeur dédié à la voie montante, et d'un transpondeur dédié à la voie descendante.

Le transpondeur tient compte, dans la chaîne de réception, du délai de propagation du signal de télécommande entre la station au sol et le satellite, ainsi que de l'effet Doppler lié au mouvement du satellite.

Selon un mode de réalisation avantageux, le transpondeur TP est attenant au système antennaire, au plus près de celui-ci, afin de minimiser la longueur des câbles, et les pertes ohmiques associées. La minimisation de la longueur des câbles permet aussi de réduire la masse globale du satellite.

Comme l'illustrent les figures 3, 4 et 5, le transpondeur peut ainsi être disposé au niveau d'un des angles de la plateforme PF, à savoir le même angle où se trouve le système antennaire (angle A1 ou angle A2).

Le fait de disposer le transpondeur à proximité immédiate du système antennaire simplifie également les opérations d'assemblage, d'intégration et de test (opérations dites AIT). En effet, l'ensemble est regroupé au même endroit de la plateforme, rendant ainsi possible une intégration sous forme de module. Dans un satellite classique, l'assemblage comprend une étape de montage d'une antenne de télécommande et d'une antenne de télémesure sur de bras situés à l'opposée l'un de l'autre, ce qui est beaucoup plus complexe en termes de fixation mécanique et de câblage électrique.

Selon un mode de réalisation particulièrement avantageux, les deux antennes de télécommande (Rx+Z, Rx-Z) sont disposées entre le transpondeur TP et les deux antennes de télémesure (Tx+Z, Tx-Z), comme illustré sur les figures 3 à 5.

Il est en effet préférable que le couple d'antennes de réception soit le plus proche possible du transpondeur pour limiter les pertes, donc le bruit, avant la section d'amplification faible bruit.

En variante, le transpondeur TP peut être disposé entre les deux antennes de télécommande (Rx+Z, Rx-Z) et les deux antennes de télémesure (Tx+Z, Tx-Z).

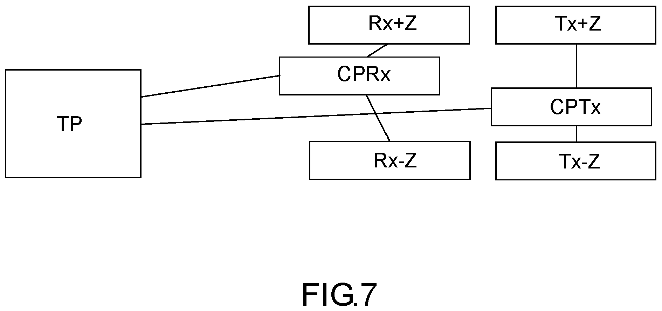

Le satellite peut également comprendre un premier coupleur CPRx configuré pour additionner des signaux provenant des antennes de télécommande (Rx+Z, Rx-Z), et un second coupleur CPTx configuré pour répartir un signal de télémesure vers les antennes de télémesure (Tx+Z, Tx-Z), comme l'illustre la figure 7. Le second coupleur CPTx peut être du type 3 dB/90°, afin d'appliquer une répartition équilibrée de la puissance en deux lignes de transmission avec un décalage de phase de 90°.

De façon avantageuse, le premier coupleur CPRx est connecté entre l'antenne de télécommande terre Rx+Z et l'antenne de télécommande anti-terre Rx-Z. Le second coupleur CPTx est connecté entre l'antenne de télémesure Terre Tx+Z et l'antenne de télémesure anti-Terre Tx-Z.

Le premier coupleur CPRx et le second coupleur CPTx sont par ailleurs connectés électriquement au transpondeur TP.

Cette configuration permet de minimiser le nombre de câbles à router entre le système antennaire et le transpondeur TP.

En variante, il est possible d'intégrer les coupleurs dans le transpondeur TP, et de connecter ainsi chacune des antennes au transpondeur TP.

La plateforme PF peut également comprendre un bras BR formant un prolongement de la plateforme PF dans le plan de la plateforme PF. Le bras BR, visible en particulier sur la figure 5, permet de réduire encore le phénomène de « scattering » provoqué par le panneau solaire PS, même si le bras n'est pas parfaitement aligné avec la tranche du panneau solaire, par rapport au cas de figure où le système antennaire est disposé dans un angle de la plateforme, au pied du panneau solaire PS.

Le bras BR est disposé le long d'un axe AX (figure 3) correspondant à la jonction entre la plateforme PF et le panneau solaire PS. Le système antennaire est alors disposé sur ledit bras BR de la plateforme PF, étant entendu que l'antenne de télécommande terre Rx+Z et l'antenne de télécommande anti-terre Rx-Z sont disposées de part et d'autre du bras BR. Il en va de même pour l'antenne de télémesure terre Tx+Z et l'antenne de télémesure anti-terre Tx-Z.

Le bras BR forme un prolongement de la plateforme PF ; l'épaisseur du bras correspond à l'épaisseur de la plateforme PF. De cette façon, les antennes d'un même couple d'antenne (antennes de télémesure ou de télécommande) restent bien espacées d'une distance inférieure à λ.

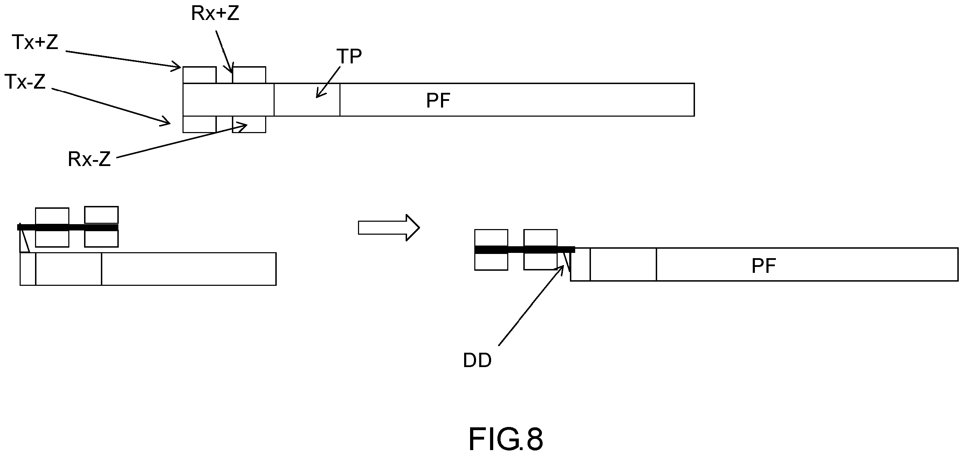

Afin de faciliter l'intégration du satellite dans la coiffe du lanceur, il peut être avantageux de prévoir un dispositif de déploiement DD du bras BR, illustré par la figure 8. Il est important de garantir la fiabilité du déploiement du bras BR lorsque le satellite est en orbite. En effet, la configuration dos à dos des antennes a pour conséquence qu'en cas de défaillance du déploiement, une des deux antennes pourrait être totalement inutilisable, ce qui pourrait gêner la liaison de télécommande ou de télémesure.

En vue de fiabiliser le déploiement, le dispositif de déploiement DD peut être équipé d'un système passif à faible choc. Un système passif faible choc est un système de déploiement utilisant un ou plusieurs ressorts, par opposition à un système actif, classiquement composé d'un moteur pas à pas. Dans un système passif faible choc, c'est la tension dans le ressort qui permet le déploiement de la structure.

L'invention permet ainsi d'améliorer les performances de Puissance isotrope rayonnée équivalente (PIRE) en émission, et le facteur de mérite (G/T) en réception, en offrant une meilleure stabilité du signal avec le changement d'attitude de la plateforme, et en augmentant ainsi le champ de vue adressable (pas d'oscillations dans une certaine gamme angulaire).

Réciproquement, à iso-PIRE ou iso-G/T, l'invention permet de réduire la puissance du transpondeur, ce qui permet d'avoir moins de dissipation thermique, et de pouvoir intégrer un système d'amplification plus compétitif. La puissance étant réduite, l'effet corona est moins contraignant.

## Revendications

1. Satellite (SAT) comprenant une plateforme (PF), au moins un panneau solaire (PS) destiné à alimenter le satellite (SAT) en énergie électrique, le panneau solaire (PS) étant fixé le long d'un côté de la plateforme (PF), le satellite comprenant un système antennaire (Rx+Z, Rx-Z, Tx+Z, Tx-Z) comprenant deux antennes (Rx+Z, Rx-Z) de télécommande, et deux antennes (Tx+Z, Tx-Z) de télémesure, **caractérisé en ce que** :
- les deux antennes (Rx+Z, Rx-Z) de télécommande sont disposées dos à dos de part et d'autre de la plateforme, et espacées l'une de l'autre d'une distance inférieure ou égale à λ, où λ correspond à la longueur d'onde du signal de télécommande ou de télémesure,
- les deux antennes (Tx+Z, Tx-Z) de télémesure sont disposées dos à dos, de part et d'autre de la plateforme, et espacées l'une de l'autre d'une distance inférieure ou égale à λ,
- le système antennaire est disposé au niveau de l'une des deux extrémités du côté de la plateforme (PF) sur lequel est fixé le panneau solaire (PS).

2. Satellite selon la revendication 1, dans lequel la plateforme (PF) comprend un transpondeur (TP), le transpondeur (TP) étant attenant au système antennaire (Rx+Z, Rx-Z, Tx+Z, Tx-Z).

3. Satellite selon la revendication 2, dans lequel les deux antennes (Rx+Z, Rx-Z) de télécommande sont disposées entre le transpondeur (TP) et les deux antennes (Tx+Z, Tx-Z) de télémesure.

4. Satellite selon la revendication 2, dans lequel le transpondeur (TP) est disposé entre les deux antennes (Rx+Z, Rx-Z) de télécommande et les deux antennes (Tx+Z, Tx-Z) de télémesure.

5. Satellite selon l'une des revendications précédentes, dans lequel la plateforme (PF) comprend un bras formant un prolongement de la plateforme (PF) dans le plan de la plateforme (PF), le long d'un axe (AX) correspondant à la jonction entre la plateforme (PF) et le panneau solaire (PS), le système antennaire (Rx+Z, Rx-Z, Tx+Z, Tx-Z) étant disposé sur ledit bras (BR) de la plateforme (PF).

6. Satellite selon la revendication 5, dans lequel le bras (BR) de la plateforme comprend un dispositif de déploiement (DD), ledit dispositif de déploiement (DD) étant équipé d'un système passif à faible choc.

7. Satellite selon l'une des revendications précédentes, dans lequel le satellite comprend un premier coupleur (CPRx) configuré pour additionner des signaux provenant des antennes (Rx+Z, Rx-Z) de télécommande, un second coupleur (CPTx) configuré pour répartir un signal de télémesure vers les antennes (Tx+Z, Tx-Z) de télémesure, le premier coupleur (CPRx) et le second coupleur (CPTx) étant respectivement connectés entre les antennes (Rx+Z, Rx-Z) de télécommande, et entre les antennes (Tx+Z, Tx-Z) de télémesure.

## Patentansprüche

1. Satellit (SAT), umfassend eine Plattform (PF), mindestens ein Solarpaneel (PS) zur Versorgung des Satelliten (SAT) mit elektrischer Energie, wobei das Solarpaneel (PS) entlang einer Seite der Plattform (PF) befestigt ist, wobei der Satellit ein Antennensystem (Rx+Z, Rx-Z, Tx+Z, Tx-Z) umfasst, das zwei Fernsteuerungsantennen (Rx+Z, Rx-Z) und zwei Telemetrieantennen (Tx+Z, Tx-Z) umfasst, **dadurch gekennzeichnet, dass**:
- die beiden Fernsteuerungsantennen (Rx+Z, Rx-Z) Rücken an Rücken auf beiden Seiten der Plattform angeordnet sind und einen Abstand voneinander aufweisen, der kleiner als oder gleich λ, ist, wobei λ der Wellenlänge des Fernsteuerungs- oder Telemetriesignals entspricht,
- die beiden Fernsteuerungsantennen (Tx+Z, Tx-Z) Rücken an Rücken auf beiden Seiten der Plattform angeordnet sind und einen Abstand voneinander aufweisen, der kleiner als oder gleich λ ist,
- das Antennensystem an einem der beiden Enden der Seite der Plattform (PF) angeordnet ist, an der das Solarpaneel (PS) befestigt ist.

2. Satellit nach Anspruch 1, wobei die Plattform (PF) einen Transponder (TP) umfasst, wobei der Transponder (TP) an das Antennensystem (Rx+Z, Rx-Z, Tx+Z, Tx-Z) angrenzt.

3. Satellit nach Anspruch 2, wobei die beiden Fernsteuerungsantennen (Rx+Z, Rx-Z) zwischen dem Transponder (TP) und den beiden Telemetrieantennen (Tx+Z, Tx-Z) angeordnet sind.

4. Satellit nach Anspruch 2, wobei der Transponder (TP) zwischen den beiden Fernsteuerungsantennen (Rx+Z, Rx-Z) und den beiden Telemetrieantennen (Tx+Z, Tx-Z) angeordnet ist.

5. Satellit nach einem der vorhergehenden Ansprüche, wobei die Plattform (PF) einen Arm umfasst, der eine Verlängerung der Plattform (PF) in der Ebene der Plattform (PF) bildet, entlang einer Achse (AX), die der Verbindung zwischen der Plattform (PF) und dem Solarpaneel (PS) entspricht, wobei das Antennensystem (Rx+Z, Rx-Z, Tx+Z, Tx-Z) auf dem Arm (BR) der Plattform (PF) angeordnet ist.

6. Satellit nach Anspruch 5, wobei der Arm (BR) der Plattform eine Entfaltungsvorrichtung (DD) umfasst, wobei die Entfaltungsvorrichtung (DD) mit einem passiven Low-impact-System ausgestattet ist.

7. Satellit nach einem der vorhergehenden Ansprüche, wobei der Satellit einen ersten Koppler (CPRx) umfasst, der konfiguriert ist, um Signale von den Fernsteuerungsantennen (Rx+Z, Rx-Z) zu addieren, einen zweiten Koppler (CPTx), der konfiguriert ist, um ein Telemetriesignal an die Fernsteuerungsantennen (Tx+Z, Tx-Z) zu übertragen, wobei der erste Koppler (CPRx) und der zweite Koppler (CPTx) zwischen die Fernsteuerungsantennen (Rx+Z, Rx-Z) bzw. zwischen die Fernsteuerungsantennen (Tx+Z, Tx-Z) geschaltet sind.

## Claims

1. A satellite (SAT) comprising a platform (PF), at least one solar panel (PS) for supplying the satellite (SAT) with electrical energy, the solar panel (PS) being fixed along one side of the platform (PF), the satellite comprising an antenna system (Rx+Z, Rx-Z, Tx+Z, Tx-Z) comprising two remote control antennas (Rx+Z, Rx-Z) and two remote measurement antennas (Tx+Z, Tx-Z), **characterized in that**:
- the two remote control antennas (Rx+Z, Rx-Z) are disposed back to back on either side of the platform, and spaced one from the other by a distance less than or equal to λ, where λ corresponds to the wavelength of the remote control or remote measurement signal,
- the two remote measurement antennas (Tx+Z, Tx-Z) are disposed back to back, on either side of the platform, and spaced one from the other by a distance less than or equal to λ,
- the antenna system is disposed at one of the two ends of the side of the platform (PF) on which the solar panel (PS) is fixed.

2. The satellite according to claim 1, wherein the platform (PF) comprises a transponder (TP), the transponder (TP) being adjacent to the antenna system (Rx+Z, Rx-Z, Tx+Z, Tx-Z).

3. The satellite according to claim 2, wherein the two remote control antennas (Rx+Z, Rx-Z) are disposed between the transponder (TP) and the two remote measurement antennas (Tx+Z, Tx-Z).

4. The satellite according to claim 2, wherein the transponder (TP) is disposed between the two remote control antennas (Rx+Z, Rx-Z) and the two remote measurement antennas (Tx+Z, Tx-Z).

5. The satellite according to one of the preceding claims, wherein the platform (PF) comprises an arm forming an extension of the platform (PF) in the plane of the platform (PF), along an axis (AX) corresponding to the junction between the platform (PF) and the solar panel (PS), the antenna system (Rx+Z, Rx-Z, Tx+Z, Tx-Z) being disposed on said arm (BR) of the platform (PF).

6. The satellite according to claim 5, wherein the arm (BR) of the platform comprises a deployment device (DD), said deployment device (DD) being equipped with a low-impact passive system.

7. The satellite according to one of the preceding claims, wherein the satellite comprises a first coupler (CPRx) configured for summing signals coming from the remote control antennas (Rx+Z, Rx-Z), a second coupler (CPTx) configured for distributing a remote measurement signal to the remote measurement antennas (Tx+Z, Tx-Z), the first coupler (CPRx) and the second coupler (CPTx) being respectively connected between the remote control antennas (Rx+Z, Rx-Z), and between the remote measurement antennas (Tx+Z, Tx-Z).
